# FASCICULE DE BREVET EUROPEEN

(11) **EP 4 067 205 B1**
(45) Date de publication et mention de la délivrance du brevet: **21.08.2024**
(21) Numéro de dépôt: 22165193.8
(22) Date de dépôt: 29.03.2022
(51) Int. Cl.: B62B 5/00, B62B 5/06

(54) **POIGNEE DE COMMANDE HAPTIQUE POUR CHARIOT OU SIMILAIRE, KIT D'ASSISTANCE AU DEPLACEMENT D'UN CHARIOT COMPRENANT UNE TELLE POIGNEE DE COMMANDE, ET CHARIOT EQUIPE D'UN TEL KIT D'ASSISTANCE**
HAPTISCHER STEUERGRIFF FÜR EINEN WAGEN ODER ÄHNLICHES, HILFSSET FÜR DIE BEWEGUNG EINES WAGENS MIT EINEM SOLCHEN STEUERGRIFF, UND WAGEN, DER MIT EINEM SOLCHEN HILFSSET AUSGESTATTET IST
HAPTIC CONTROL HANDLE FOR CARRIAGE OR SIMILAR, KIT FOR ASSISTING THE MOVEMENT OF A CARRIAGE COMPRISING SUCH A CONTROL HANDLE, AND CARRIAGE PROVIDED WITH SUCH AN ASSISTANCE KIT

(30) Priorité: 30.03.2021 FR 2103290
(43) Date de publication de la demande: 05.10.2022
(73) Titulaire: Hublex, 91400 Orsay (FR)
(72) Inventeur: MARTINELLI, Pascal, 92330 Sceaux (FR); LEVY, Jonathan, 92160 Antony (FR)
(74) Mandataire: Cabinet Boettcher

(56) Documents cités:
- WO-A1-2020/226198
- JP-A- 2017 052 468
- KR-A- 20180 067 467
- US-A1- 2014 345 956

## Description

L'invention concerne une poignée de commande haptique pour chariot ou similaire (comme un roll, un trolley, un fauteuil roulant, un lit d'hôpital, plus généralement tout objet monté sur roues ou roulettes, susceptible de porter une charge et d'être poussé ou motorisé). L'invention concerne également un kit d'assistance au déplacement d'un chariot comportant une telle poignée, et un chariot muni d'un tel kit d'assistance.

### ARRIERE PLAN DE L'INVENTION

La manutention des chariots de transport dans les entrepôts est une source de troubles musculo-squelettiques non négligeable. Pour diminuer ces troubles, il a été proposé de motoriser ces chariots, par exemple en accouplant des moteurs électriques à certaines des roues du chariot. Le chariot est alors muni d'un organe de commande commandant les moteurs de sorte qu'ils assistent au déplacement du chariot quand l'organe de manoeuvre est sollicité par l'utilisateur, de façon à diminuer fortement l'effort nécessaire pour la mise en mouvement du chariot ou l'arrêt de celui-ci.

En particulier, il apparaît un besoin de pouvoir déplacer le chariot en ligne droite, ou de pouvoir l'orienter à volonté. A cet effet, on connaît des organes de commande sous la forme d'un joystick implanté sur le chariot pour être manoeuvré par l'utilisateur. Cependant les utilisateurs ne sont pas satisfaits d'un tel organe. En effet, il est souvent utilisé pour commander les moteurs de roues en mode tout ou rien, ce qui conduit à des mouvements du chariot assez saccadés. En outre, l'utilisateur doit maintenir le joystick à la position désirée alors que le chariot est en mouvement, ce qui est parfois peu pratique notamment sur des sols irréguliers.

On connaît, par exemple des documents KR20180067467A, WO2020226198A1 et JP2017052468A, des poignées de commande comportant des capteurs d'effort permettant de mesurer des efforts exercés sur la poignée par un utilisateur.

### OBJET DE L'INVENTION

L'invention vise à proposer une poignée de commande simple à utiliser et facilitant la manoeuvre d'un chariot motorisé. Dans tout ce qui suit, les termes « pousser », « tirer », « vers la gauche », « vers la droite », décrivent une action de l'utilisateur sur la poignée de commande et sont à comprendre en référence à une direction d'avancement longitudinal du chariot.

### PRESENTATION DE L'INVENTION

En vue de la réalisation de ce but, on propose une poignée de commande pour chariot ou similaire équipé de deux roues motorisées, comportant une barre de manoeuvre attelée à deux corps d'épreuve espacés l'un de l'autre et destinés à être solidarisés au chariot, chaque corps d'épreuve comportant des premier et deuxième zones déformables associées à des premier et deuxième capteurs adaptés à engendrer des signaux électrique respectifs en réponse à des déformations des zones déformables du corps d'épreuve lorsque l'utilisateur exerce une action sur la barre de manoeuvre, la poignée de commande comportant des moyens de traitement adaptés :
- à générer des valeurs numériques respectives à partir des signaux électriques des capteurs :
- à discriminer à partir des valeurs numériques quatre actions sur la barre de manoeuvre, dont (A) une action à pousser sur la barre de manoeuvre, (B) une action à tirer sur la barre de manoeuvre ; (C) une action vers la gauche, et (D) une action vers la droite ;
- et à générer des ordres correspondants à destination des roues motorisées, pour en réponse à l'action (A) faire tourner les moteurs des roues dans un même sens pour faire mouvoir le chariot selon un premier sens d'avancement; en réponse à l'action (B) faire tourner les moteurs des roues dans un même sens pour faire mouvoir le chariot dans un second sens d'avancement opposé au premier sens d'avancement ; en réponse à l'action (C) faire tourner les moteurs des roues dans des sens opposés pour faire pivoter le chariot dans un premier sens pivotement ; et en réponse à l'action (D) faire tourner les moteurs des roues dans des sens opposés pour faire pivoter le chariot dans un second sens de pivotement opposé au premier sens de pivotement.

L'utilisation de deux corps d'épreuve munis de deux capteurs chacun permet de discriminer 2x2=4 actions différentes, et permet donc de générer quatre types d'ordres, qui peuvent bien entendu être superposables si deux actions sont détectées simultanément (par exemple, une action à pousser en même temps qu'une action vers la gauche). On pourra en outre associer les valeurs numériques issues des quatre capteurs de sorte que la commande des moteurs des roues soit insensible à la position de la main de l'utilisateur sur la barre de manoeuvre.

De préférence, les moyens de traitement comportent des moyens de calibration pour générer à partir des signaux électriques des capteurs des valeurs numérique nulles en l'absence d'action sur la barre de manoeuvre.

De préférence encore, la poignée comporte des moyens de détection d'un empoignement de la barre de manoeuvre par l'utilisateur.

De préférence encore, les moyens de traitement intègrent des moyens de sécurité maintenant les roues motorisées freinées si la barre de manoeuvre n'est pas empoignée, et n'autorisant l'alimentation des moteurs des roues motorisées que si la barre de manoeuvre est empoignée par l'utilisateur.

Selon un aspect particulier de l'invention, les capteurs sont adaptés à délivrer des signaux électriques proportionnels aux déformations subies par les corps d'épreuve, les ordres à destination des moteurs étant eux-mêmes proportionnels à ces déformations.

L'invention est également relative à un kit d'assistance au déplacement d'un chariot comportant une poignée de commande selon l'invention, et au moins l'un des éléments suivants :
- deux roues motorisées ;
- une carte électronique de commande formant les moyens de traitement ;
- un boîtier d'alimentation des roues motorisées, comportant des batteries d'accumulateurs.

### DESCRIPTION DES FIGURES

L'invention sera mieux comprise à la lumière de la description qui suit d'un mode particulier de réalisation de l'invention, en référence aux figures des dessins annexés, parmi lesquelles :
[Fig. 1] la figure 1 est une vue en perspective d'un chariot en cours d'équipement avec un kit d'assistance au déplacement comprenant une poignée de commande selon l'invention;
[Fig. 2] la figure 2 est une vue en perspective du chariot de la figure 1, équipé de la poignée de commande selon l'invention montée à l'horizontale;
[Fig. 3] la figure 3 est une vue en perspective éclatée de la poignée de commande équipant le chariot de la figure 2 ;
[Fig. 4] La figure 4 regroupe une vue de face et une vue en perspective de l'un des corps d'épreuve équipant la poignée de commande de la figure 3 ;
[Fig. 5] La figure 5 est une vue de face du corps d'épreuve de la figure 4 illustré dans un premier état de déformation ;
[Fig. 6] La figure 6 est une vue de face du corps d'épreuve de la figure 4 illustré un deuxième état de déformation ; [Fig. 7] La figure 7 est une vue de face du corps d'épreuve de la figure 4 illustré dans un troisième état de déformation ;
[Fig. 8] La figure 8 est une vue en perspective d'un chariot équipé d'une poignée de commande selon l'invention montée à la verticale, le chariot n'étant représenté que par sa silhouette.

### DESCRIPTION DETAILLEE DE L'INVENTION

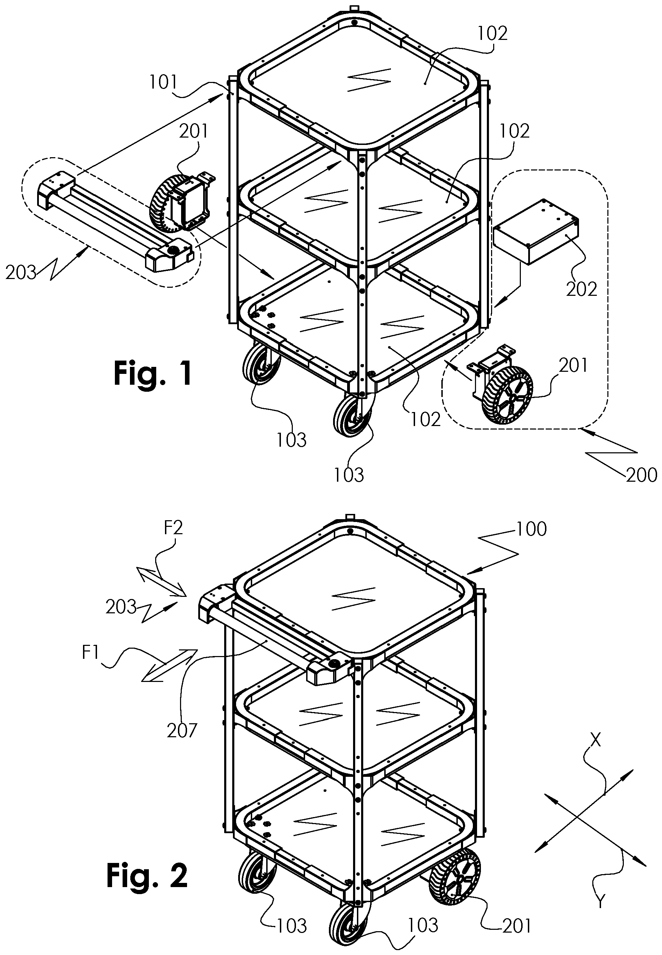

Les figures 1 et 2 illustrent un chariot 100 équipé d'un kit d'assistance au déplacement selon l'invention. Le chariot 100 comporte ici une structure tubulaire 101 portant des plateaux 102 destinés à recevoir des charges, et est équipé de deux roues folles 103. Le chariot 100 est ici équipé d'un kit de motorisation 200 comportant deux roues motorisées 201, un boîtier d'alimentation 202 qui prend place sous le plateau 102 inférieur et qui comporte ici des batteries d'accumulateurs, une carte d'alimentation et des cartes pilotes pour alimenter les moteurs des roues motorisées 201, et enfin une poignée de commande 203 rapportée sur le chariot 100 pour pouvoir être appréhendée par un utilisateur.

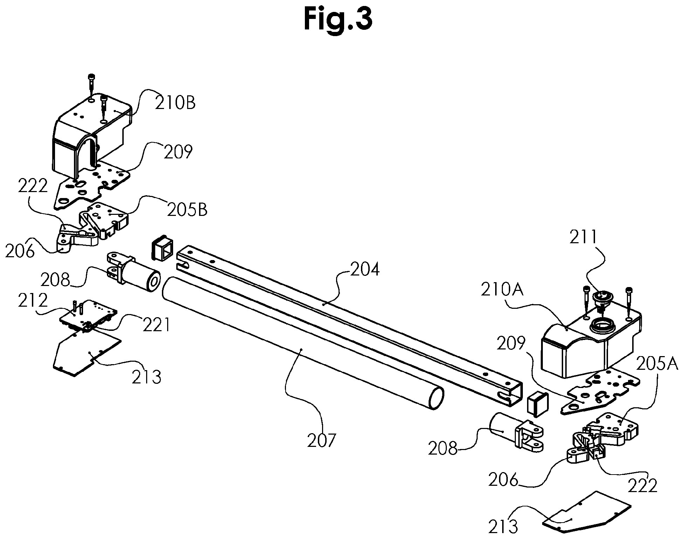

Le kit de motorisation a pour fonction de faciliter les déplacements du chariot 100, en fournissant l'effort nécessaire au déplacement du chariot alors que celui-ci peut être très chargé. La poignée de commande 203 est un dispositif haptique permettant de distinguer quatre types d'actions de l'utilisateur au chariot sur la poignée de commande 203: un effort longitudinal F1, parallèle à une direction d'avancement longitudinal X du chariot, à pousser ou à tirer, et un effort transversal F2, parallèle à une direction transversale Y, vers la gauche ou vers la droite. Ces efforts sont exploités pour commander les roues motorisées 201, soit pour faire avancer le chariot 100 en faisant tourner les deux roues motorisées 201 dans le même sens, soit pour faire tourner le chariot 100 en faisant tourner les deux roues motorisées 201 dans des sens opposés, ou encore toute superposition de ces deux modes de fonctionnement. Pour ce faire, et comme cela est plus visible à la figure 3, la poignée de commande 203 comporte un support 204, ici un tube de section carrée destiné à être solidarisé à la structure tubulaire 101 du chariot 100. Sur le support 204 sont rapportés de façon espacée deux corps d'épreuve 205A, 205B déformables qui seront détaillés plus loin, comportant à leurs extrémités des cornes 206 respectives sur lesquelles une barre de manoeuvre 207 est attelée via des embouts 208 articulés sur les cornes 206. Les corps d'épreuve 205A, 205B sont surmontés de pare-chocs 209 sous la forme de plaques métalliques respectives conformées pour éviter aux corps d'épreuve 205A, 205B de subir des chocs en cas de collision du chariot contre un obstacle. Le tout est recouvert de deux capots droit et gauche 210A, 210B. Le capot droit 210A comporte un interrupteur 211 pour la mise en route de l'assistance motorisée du chariot, tandis que le capot gauche 210B reçoit une carte électronique de traitement 212. Les capots 210A, 210B sont fermés par des fonds 213.

Le câblage n'a pas été représenté pour plus de clarté. Néanmoins, les capteurs équipant les corps d'épreuve 205A, 205B sont reliés électriquement à la carte électronique de traitement 212 par des câbles passant le cas échéant dans le support 204 ou dans la barre de manoeuvre 207, tandis que la carte électronique de traitement 212 est reliée aux cartes présentes dans le boîtier d'alimentation 202 par un bus CAN. Le boîtier d'alimentation 202 est bien entendu relié aux moteurs des roues motorisées 201 par des câbles d'alimentation.

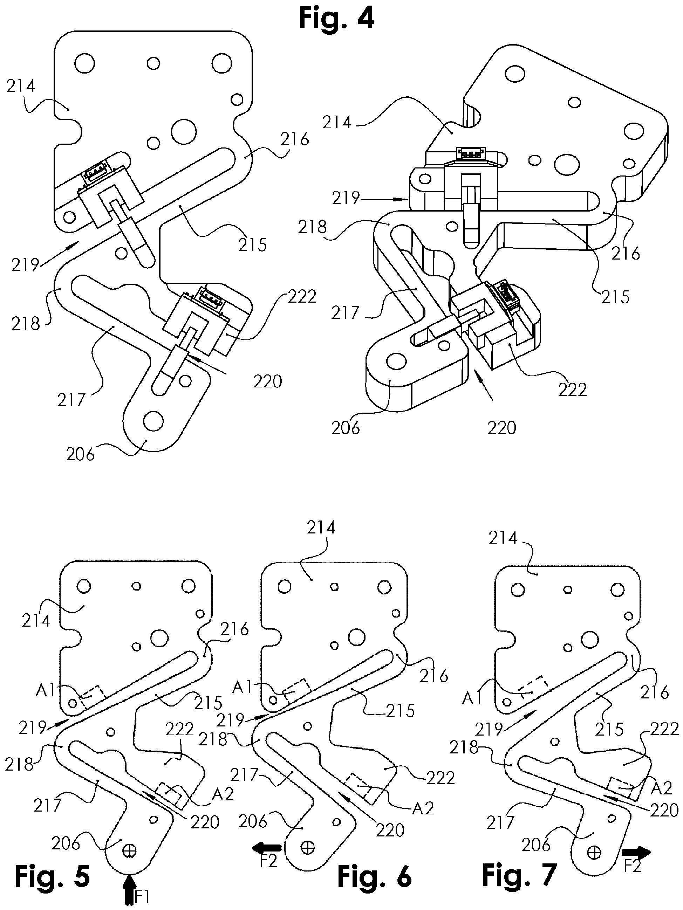

Le corps d'épreuve 205A est maintenant détaillé en référence aux figures 4 à 7. Le corps d'épreuve est découpé dans un bloc de métal, par exemple en aluminium, et comporte un massif 214 destiné à être fixé rigidement sur le support 204. Du massif 214 s'étend une première zone déformable comportant un premier bras 215 relié au massif 214 par un premier coude 216, et une deuxième zone déformable comportant un deuxième bras 217 qui est relié au premier bras 215 par un deuxième coude 218 et qui se termine par la corne 206 sur laquelle la barre de manoeuvre 207 est attelée. Les deux zones déformables sont donc ici disposées en série entre le massif 214 et la corne 206. Entre le massif 214 et le premier bras 215 s'étend une première fente 219 dont la largeur varie sous les déformations imposées au corps d'épreuve. Le premier bras 215 comporte un appendice 222 qui s'étend pour définir avec le deuxième bras 217 une deuxième fente 220.

Lorsque l'utilisateur appuie sur la barre de manoeuvre 207, il provoque une déformation élastique des coudes 216, 218 et une flexion élastique des bras 215,217 qui font varier la largeur des première et deuxième fentes 219,220, représentative de la flèche des bras. Ces déformations sont mesurées par un premier capteur A1 disposé sur le massif 214 pour mesurer les variations de largeur de la première fente 219, et un deuxième capteur A2 disposé sur l'appendice 222 pour mesurer les variations de la largeur de la deuxième fente 220. Ici, les capteurs sont des fourches optiques analogiques chacune fixées dans une poche ménagée d'un côté de la fente concernée, et qui coopèrent avec des obturateurs optiques fixés dans une poche en regard de l'autre côté de la fente concernée. Le déplacement relatif d'une fourche optique et de l'obturateur associé permet de générer un signal électrique linéaire et proportionnel aux déformations de la zone déformable associée. Les capteurs A1,A2 sont représentés sur la figure 4, mais ils sont indiqués uniquement en pointillés sur les figures 5 à 7, pour plus de clarté. D'autres types de capteurs pourront bien entendu être utilisés pour mesurer ces déformations.

Les corps d'épreuve 205A,205B sont ici configurés pour être facilement réalisés en usinage 2D (contour de la pièce, divers alésages pour recevoir des vis de fixation, ou une broche d'attelage de la barre de manœuvre...), voire en 2,5 D si comme ici des poches sont réalisées pour recevoir les capteurs A1, A2 de sorte qu'ils ne dépassent pas de la surface extérieure des corps d'épreuve 205A, 205B. On remarquera qu'ici les deux corps d'épreuve 205A, 205B sont identiques, mais montés sur le support 204 de sorte que, dans l'exemple illustré, le corps d'épreuve 205A ait ses capteurs A1,A2 par-dessus, et le corps d'épreuve 205B ait ses capteurs (non visibles, mais désignés B1,B2 par la suite) par-dessous, les deux cornes 206 étant toutes deux attelées à la barre de manoeuvre 207.

Le fonctionnement de l'ensemble est le suivant. Les signaux électriques générés par les capteurs respectifs A1,A2, B1,B2 génèrent des signaux électriques qui sont reçus par la carte électronique et calibrés pour générer quatre valeurs numériques respectives SA1,SA2,SB1,SB2 calibrées (par exemple en leur soustrayant une valeur de référence, en leur appliquant un facteur d'échelle ou en les discrétisant) de sorte que ces valeurs numériques soient nulles en l'absence de sollicitation sur la barre de manoeuvre 207.

Si, comme cela est illustré à la figure 5, l'utilisateur appuie sur la barre de manoeuvre 207 en générant un effort longitudinal F1 dans le sens de l'avancement du chariot, on observe que les deux fentes 219,220 vont se fermer comme illustré ici et les signaux électriques des capteurs A1,A2 vont donner lieu à des valeurs numériques SA1 et SA2 d'un premier signe. Si au contraire l'utilisateur tire sur la barre de manoeuvre 207, les fentes 219,220 vont s'ouvrir, et les valeurs numériques SA1, SA2 issues des signaux électriques des deux capteurs A1,A2 seront d'un deuxième signe opposé au premier signe.

Si comme illustré à la figure 6, l'utilisateur exerce sur la barre de manoeuvre 207 un effort transversal F2 vers la gauche, on constate que la première fente 219 du corps d'épreuve situé à gauche 205A se ferme, tandis que la deuxième fente 220 s'ouvre. Ainsi le premier capteur A1 va générer une valeur numérique SA1 du premier signe, tandis que le deuxième capteur A2 va générer une valeur numérique SA2 du deuxième signe.

Si enfin, comme illustré à la figure 7, l'utilisateur exerce sur la barre de manoeuvre 207 un effort transversal F2 vers la droite, on constate que la première fente 219 s'ouvre, tandis que la deuxième fente 220 se ferme. Ainsi le premier capteur A1 va générer un une valeur numérique SA1 du deuxième signe, tandis que le deuxième capteur A2 va générer une valeur numérique SA2 du premier signe.

La barre de manoeuvre 207 étant attelée aux deux corps d'épreuve 205A, 205B, il s'ensuit que l'effort longitudinal F1 est repris par ceux-ci en fonction de la position du point d'application de l'effort F1 sur la barre de manoeuvre 207. Quant à l'effort transversal F2, il est également appliqué aux deux corps d'épreuve 205A, 205B. Le cas échéant, si un jeu fonctionnel a été installé dans l'articulation de la barre de manoeuvre 207 sur les corps d'épreuve 205A,205B, l'effort longitudinal sera appliqué soit au corps d'épreuve 205A pour une action pour une action vers la gauche, soit au corps d'épreuve 205B pour une action vers la droite.

Ainsi, les capteurs A1,A2 du premier corps d'épreuve 205A et les capteurs B1,B2 du deuxième corps d'épreuve 205B délivrent des valeurs numériques SA1,SA2,SB1,SB2 dont les signes sont indiqués dans le tableau suivant, compte tenu ici du montage du deuxième corps d'épreuve 205B à l'inverse du montage du premier corps d'épreuve 205A.

| | | SA1 | SA2 | SB1 | SB2 |
|---|---|---|---|---|---|
| A | Effort longitudinal F1 vers l'avant | Premier signe | Premier signe | Premier signe | Premier signe |
| B | Effort longitudinal F1 vers l'arrière | Deuxième signe | Deuxième signe | Deuxième signe | Deuxième signe |
| C | Effort transversal F2 vers la gauche | Premier signe | Deuxième signe | Deuxième signe (ou nul) | Premier signe (ou nul) |
| D | Effort transversal F2 vers la droite | Deuxième signe (ou nul) | Premier signe (ou nul) | Premier signe | Deuxième Signe |

Il est ainsi possible de discriminer quatre actions A,B,C,D distinctes de l'utilisateur sur la poignée de manoeuvre 207 reconnaissables par la seule analyse des signes des quatre valeurs numériques, ce qui suffit à la carte électronique de traitement 212 pour générer des ordres en tout ou rien des moteurs des roues motorisées 201. Cependant, comme les valeurs numériques issues des capteurs A1,A2,B1,B2 sont ici proportionnelles aux variations de largeurs des fentes 219,220, qui sont elles-mêmes proportionnelles aux efforts F1, F2, il est même possible, par une simple combinaison linéaire de ces valeurs numériques, d'estimer non seulement le sens, mais l'amplitude des efforts F1,F2, ce qui permet de générer des ordres proportionnels pour les moteurs des roues motorisées 201.

L'avantage d'utiliser deux corps d'épreuve est qu'il est possible de rendre indépendant la commande des moteurs des roues motorisées 201 du point d'application de l'effort sur la barre de manoeuvre 207. En effet, pour ce qui est de l'effort longitudinal F1, celui-ci se répartit sur les deux corps d'épreuve. Les valeurs numériques SA1 et SB1 d'une part, et SA2,SB2 d'autre part peuvent être combinées pour produire un ordre proportionnel à l'effort longitudinal F1.

Dans la situation A, la carte électronique de traitement 212 enverra des ordres aux cartes pilotes des moteurs des roues motorisées 201 pour les faire tourner tous les deux dans un sens d'avancement du chariot. Dans la situation B, la carte électronique de traitement 212 enverra des ordres aux cartes pilotes des moteurs des roues motorisées 201 pour les faire tourner tous les deux dans un sens de recul du chariot. Dans la situation C, la carte électronique de traitement 212 enverra des ordres aux cartes pilotes des moteurs des roues motorisées 201 pour les faire tourner dans des sens opposés, provoquant un pivotement du chariot dans le sens horaire. Enfin, dans la situation D, la carte électronique de traitement 212 enverra des ordres aux cartes pilotes des moteurs des roues motorisés 201 pour les faire tourner dans des sens opposés, provoquant un pivotement du chariot dans le sens antihoraire.

Bien entendu, en pratique l'utilisateur peut imposer à la fois un effort longitudinal F1 et un effort transversal F2. Toute combinaison envisageable de ces deux efforts est possible, et les moteurs des roues motorisées recevront des ordres conformes à cette combinaison. L'avantage d'utiliser deux corps d'épreuve est qu'il est possible de rendre indépendant la commande des moteurs des roues motorisées 201 du point d'application de l'effort sur la barre de manoeuvre 207. En effet, pour ce qui est de l'effort longitudinal F1, celui-ci se répartit sur les deux corps d'épreuve. Les valeurs numériques issues des capteurs des deux corps d'épreuve pouvant être additionnées pour produire une un ordre proportionnel à l'effort longitudinal F1.

Le résultat de l'invention est une assistance au déplacement du chariot, permettant de surmonter à la fois les forces de frottement de roulement et les forces d'inertie, de sorte que l'utilisateur ne perçoit que très peu la masse de celui-ci et à l'impression de manoeuvrer un chariot très léger. En particulier, l'invention permet de réduire fortement la force initiale de poussée nécessaire à la mise en mouvement du chariot, ainsi que la force de maintien du mouvement, notamment quand le chariot roule sur une pente.

Diverses sécurités peuvent être mises en oeuvre, comme le freinage des roues dès que l'utilisateur lâche la barre de manoeuvre 207. A cet effet, et selon un aspect particulier de l'invention, le capot gauche 210 B est ici équipé d'une LED 221 adaptée pour émettre un flux lumineux parallèlement à la barre de manoeuvre 207 à quelques millimètres de celle-ci. Le flux lumineux est reçu par une cellule photoélectrique (non visible ici) portée par le capot droit 210A en regard de la LED 221. Lorsque l'utilisateur n'empoigne pas la barre de manoeuvre 207, le flux lumineux de la LED 221 parvient à la cellule photoélectrique, ce qui indique que le chariot n'est pas manoeuvré ou a été lâché. Cette information peut être utilisée pour inhiber le fonctionnement des moteurs, et/ou provoquer un freinage du chariot. Ce n'est que si le flux lumineux de la LED 221 est interrompu par la main de l'utilisateur qui empoigne la barre de manoeuvre 207 que la carte électronique de traitement 212 autorise l'alimentation des moteurs. Cette disposition évite le déplacement non voulu du chariot à la suite d'un choc ou d'une poussée sur la barre de manoeuvre 207 avec une autre partie du corps que la main. En variante, on peut prévoir un dispositif capacitif adapté à détecter la présence de la main de l'utilisateur sur la barre de manoeuvre 207, à condition que celle-ci soit électriquement conductrice.

Par ailleurs, la carte électronique de traitement 212 pourra intégrer une limitation de la vitesse de rotation des roues, motorisées 201, empêchant une trop grande vitesse de déplacement du chariot même si l'utilisateur appuie fortement sur la barre de manoeuvre 207.

On pourra équiper tout chariot du dispositif de l'invention, soit dès sa construction, soit en rétrofit sous la forme d'un kit d'assistance au déplacement à adapter sur un chariot existant, le kit pouvant comprendre, outre une ou plusieurs poignées de commande 203 :
- le boîtier d'alimentation 202 ;
- la carte d'alimentation, les cartes pilotes des moteurs des roues, la carte électronique de traitement 212, si elles ne sont pas intégrées dans la poignée ou dans le boîtier d'alimentation ;
- les roues motorisées 201.

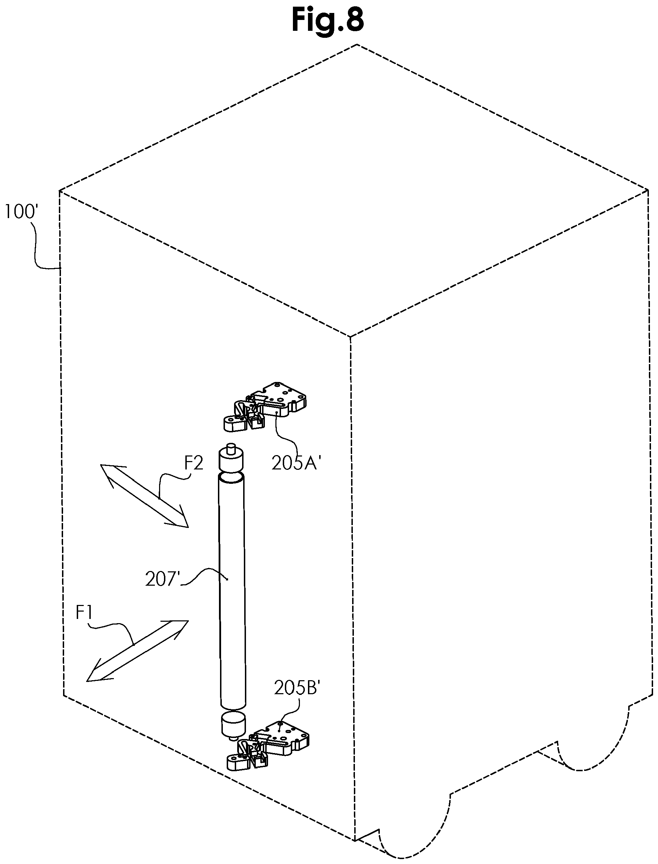

Selon une variante de l'invention, la poignée de commande 203' est configurée pour présenter une barre de manoeuvre 207' verticale. Comme cela est illustré à la figure 8, les deux corps d'épreuve 205A', 205B' sont maintenant disposés l'un au-dessus de l'autre. Ici et pour l'exemple, les deux corps d'épreuve 205A',205B' sont dans le même sens et ont leurs capteurs A1,A2',B1',B2' (non représentés) vers le haut.

On pourra utiliser une seule poignée de commande 203' à barre de manoeuvre 207' verticale, disposée soit au centre du chariot 100', ou comme ici déportée du côté où l'utilisateur intervient le plus souvent. En variante, on pourra prévoir deux poignées de commande à barres de manoeuvre verticales, disposées de part et d'autre du chariot 100', pouvant être empoignées individuellement ou simultanément. De même que précédemment, on distingue quatre actions au moyen de signes des valeur numériques électriques SA1',SA2',SB1',SB2' générées au moyens des capteurs A1',A2',B1',B2':

| | | SA1' | SA2' | SB1' | SB2' |
|---|---|---|---|---|---|
| A | Effort longitudinal F1 vers l'avant | Premier signe | Premier signe | Premier signe | Premier signe |
| B | Effort longitudinal F1 vers l'arrière | Deuxième signe | Deuxième signe | Deuxième signe | Deuxième signe |
| C | Effort transversal F2 vers la gauche | Premier signe | Deuxième signe | Premier signe | Deuxième signe |
| D | Effort transversal F2 vers la droite | Deuxième signe | Premier signe | Deuxième signe | Premier Signe |

On notera cette fois-ci que comme les deux corps d'épreuve 205A',205B' ne sont pas inversés, les valeurs numériques évoluent de manière identique lors de l'application d'un effort transversal. De la même façon que précédemment une simple combinaison des valeurs numériques SA1'SB1' d'une part, et SA2',SB2' d'autre part, permet de rendre la commande des roues motorisées insensible à la position de la main de l'utilisateur sur la barre de manoeuvre 207'. L'invention n'est pas limitée à ce qui vient d'être décrit, mais englobe au contraire toute variante entrant dans le cadre défini par les revendications. En particulier, bien qu'ici les corps d'épreuve soient configurés pour présenter deux zones déformables en série, toute autre configuration pourra être utilisée du moment que les signes des valeurs numériques issues des signaux électriques des capteurs puissent distinguer une action longitudinale à pousser ou à tirer, ou une action transversale vers la gauche ou vers la droite.

Bien qu'ici les corps d'épreuve soient rapportés sur un support 204 lui-même rapporté sur le chariot, on pourra rapporter les corps d'épreuve directement sur le chariot, sans support intermédiaire.

Bien qu'ici les zones déformables des corps d'épreuve sont disposées en série, elles pourront être disposées en parallèle.

## Revendications

1. Poignée de commande haptique (203;203') pour chariot équipé de deux roues motorisées (201), la poignée de commande (203 ;203') comportant une barre de manoeuvre (207;207') attelée à deux corps d'épreuve (205A,205B;205A',205B') destinés à être solidarisés au chariot et comportant chacun deux zones déformables (215/216, 217/218) équipées respectivement de premier et deuxième capteurs (A1/A2,B1/B2) adaptés à engendrer des signaux électrique respectifs en réponse à des déformations des zones déformables du corps d'épreuve lorsque l'utilisateur exerce une action sur la barre de manoeuvre (207;207'), la poignée de commande comportant des moyens de traitement de ces valeurs numériques (212) adaptés :
- à générer des valeurs numériques respectives (SA1/SA2,SB1/SB2) à partir des signaux électriques des capteurs ;
- à discriminer à partir des valeurs numériques quatre actions sur la barre de manoeuvre, dont (A) une action à pousser sur la barre de manoeuvre, (B) une action à tirer sur la barre de manoeuvre ; (C) une action vers la gauche, et (D) une action vers la droite ;
- et à générer des ordres correspondants à destination des roues motorisées, pour en réponse à l'action (A) faire tourner les moteurs des roues dans un même sens pour faire mouvoir le chariot selon un premier sens d'avancement; en réponse à l'action (B) faire tourner les moteurs des roues dans un même sens pour faire mouvoir le chariot dans un second sens d'avancement opposé au premier sens d'avancement ; en réponse à l'action (C) faire tourner les moteurs des roues dans des sens opposés pour faire pivoter le chariot dans un premier sens pivotement; et en réponse à l'action (D) faire tourner les moteurs des roues dans des sens opposés pour faire pivoter le chariot dans un second sens de pivotement opposé au premier sens de pivotement.

2. Poignée de commande selon la revendication 1, dans laquelle les moyens de traitement (212) comportent des moyens de calibration pour générer à partir des signaux électriques des capteurs des valeurs numériques (SA1/SA2, SB1/SB2) nulles en l'absence d'action sur la barre de manoeuvre.

3. Poignée de commande selon la revendication 1, dans lequel les corps d'épreuve (205A,205B) comportent chacun un massif (214) destiné à être solidarisé au chariot, la première zone déformable comportant un premier bras flexible (215) relié au massif par un premier coude (216) déformable et la deuxième zone déformable comportant un deuxième bras flexible (217) relié au premier bras par un deuxième coude (218) déformable.

4. Poignée de commande selon la revendication 2, dans laquelle les capteurs (A1,A2) sont des fourches optiques.

5. Poignée de commande selon la revendication 1, dans laquelle les corps d'épreuve (205A,205B) sont rapportés sur un support (204) lui-même destiné à être solidarisé au chariot, chaque corps d'épreuve étant protégé des chocs par une plaque (209) formant pare-choc.

6. Poignée de commande selon la revendication 1, dans laquelle les corps d'épreuve (205A,205B) sont reçus dans des capots (210A,210B) dont l'un reçoit une carte électronique formant les moyens de traitement (212).

7. Poignée de commande selon la revendication 1, comportant des moyens de détection (222) d'un empoignement de la barre de manoeuvre (207) par l'utilisateur.

8. Poignée de commande selon la revendication 1, dans laquelle les moyens de traitement (212) intègrent des moyens de sécurité maintenant les roues motorisées freinées si la barre de manoeuvre (207) n'est pas empoignée, et n'autorisant l'alimentation des moteurs des roues motorisées (201) que si la barre de manoeuvre (207) est empoignée par l'utilisateur.

9. Kit d'assistance au déplacement d'un chariot, comportant au moins une poignée de commande (200) selon la revendication 1, et au moins l'un des éléments suivants :
- deux roues motorisées (201) ;
- une carte électronique de commande (212) formant les moyens de traitement ;
- un boîtier d'alimentation (202) des roues motorisées, comportant des batteries d'accumulateurs.

10. Chariot à roues motorisées comportant au moins une poignée de commande selon la revendication 1.

## Patentansprüche

1. Haptischer Steuergriff (203;203') für einen mit zwei motorbetriebenen Rädern (201) ausgestatteten Wagen, wobei der Steuergriff (203;203') eine Manövrierstange (207;207') beinhaltet, die an zwei Prüfkörper (205A,205B;205A',205B') gekuppelt ist, welche dafür bestimmt sind, fest mit dem Wagen verbunden zu sein, und von denen ein jeder zwei verformbare Zonen (215/216, 217/218) beinhaltet, die jeweils mit einem ersten und einem zweiten Sensor (A1/A2,B1/B2) ausgestattet sind, welche dafür angepasst sind, in Ansprechen auf Verformungen der verformbaren Zonen des Prüfkörpers bei Ausübung einer Aktion an der Manövrierstange (207;207') durch den Benutzer entsprechende elektrische Signale zu erzeugen, wobei der Steuergriff Mittel (212) zur Verarbeitung dieser digitalen Werte beinhaltet, die dafür angepasst sind:
- aus den elektrischen Signalen der Sensoren jeweils entsprechende digitale Werte (SA1/SA2,SB1/SB2) zu erzeugen;
- ausgehend von den digitalen Werten vier Aktionen an der Manövrierstange zu unterscheiden, nämlich (A) eine Aktion, mit der die Manövrierstange geschoben wird, (B) eine Aktion, mit der an der Manövrierstange gezogen wird; (C) eine Aktion in Richtung nach links, und (D) eine Aktion in Richtung nach rechts;
- und entsprechende, an die motorbetriebenen Räder gerichtete Befehle zu erzeugen, um in Ansprechen auf die Aktion (A) die Motoren der Räder in eine selbe Richtung anzutreiben, wodurch bewirkt wird, dass sich der Wagen gemäß einer ersten Verfahrrichtung bewegt; um in Ansprechen auf die Aktion (B) die Motoren der Räder in eine selbe Richtung anzutreiben, wodurch bewirkt wird, dass sich der Wagen gemäß einer zweiten Verfahrrichtung bewegt, die der ersten Verfahrrichtung entgegengesetzt ist; um in Ansprechen auf die Aktion (C) die Motoren der Räder in entgegengesetzte Richtungen anzutreiben, wodurch ein Verschwenken des Wagens in eine erste Schwenkrichtung bewirkt wird; und um in Ansprechen auf die Aktion (D) die Motoren der Räder in entgegengesetzte Richtungen anzutreiben, wodurch ein Verschwenken des Wagens in eine der ersten Schwenkrichtung entgegengesetzte, zweite Schwenkrichtung bewirkt wird.

2. Steuergriff nach Anspruch 1, bei welchem die Verarbeitungsmittel (212) Kalibrierungsmittel beinhalten, um aus den elektrischen Signalen der Sensoren digitale Nullwerte (SA1/SA2,SB1/SB2) zu erzeugen, wenn an der Manövrierstange keine Aktion erfolgt.

3. Steuergriff nach Anspruch 1, bei welchem die Prüfkörper (205A,205B) jeweils einen Sockel (214) beinhalten, der dafür bestimmt ist, fest mit dem Wagen verbunden zu sein, wobei die erste verformbare Zone einen ersten flexiblen Arm (215) beinhaltet, der durch eine erste verformbare Biegung (216) mit dem Sockel verbunden ist, und wobei die zweite verformbare Zone einen zweiten flexiblen Arm (217) beinhaltet, der durch eine zweite verformbare Biegung (218) mit dem ersten Arm verbunden ist.

4. Steuergriff nach Anspruch 2, bei welchem die Sensoren (A1,A2) optische Gabeln sind.

5. Steuergriff nach Anspruch 1, bei welchem die Prüfkörper (205A,205B) auf einen Träger (204) aufgesetzt sind, der seinerseits dafür bestimmt ist, fest mit dem Wagen verbunden zu sein, wobei jeder Prüfkörper durch eine stoßdämpfende Platte (209) vor Stößen geschützt ist.

6. Steuergriff nach Anspruch 1, bei welchem die Prüfkörper (205A,205B) in Abdeckungen (210A,210B) aufgenommen sind, von denen eine eine Elektronikkarte aufnimmt, welche die Verarbeitungsmittel (212) bildet.

7. Steuergriff nach Anspruch 1, mit Mitteln zum Erfassen (222) eines Ergreifens der Manövrierstange (207) durch den Benutzer.

8. Steuergriff nach Anspruch 1, bei welchem in den Verarbeitungsmitteln (212) Sicherungsmittel integriert sind, durch welche die motorbetriebenen Räder in gebremstem Zustand gehalten werden, solange die Manövrierstange (207) nicht ergriffen wird, und durch welche die Stromversorgung der Motoren der motorbetriebenen Räder (201) erst dann erlaubt wird, wenn die Manövrierstange (207) von dem Benutzer ergriffen wird.

9. Hilfsset für die Bewegung eines Wagens mit zumindest einem Steuergriff (200) nach Anspruch 1 und mit zumindest einem der folgenden Elemente:
- zwei motorbetriebene Räder (201);
- eine elektronische Steuerkarte (212), welche die Verarbeitungsmittel bildet;
- eine Energieversorgungsbox (202) der motorbetriebenen Räder, in welcher die Akkumulatorbatterien untergebracht sind.

10. Wagen mit motorbetriebenen Rädern, der zumindest einen Steuergriff nach Anspruch 1 beinhaltet.

## Claims

1. Haptic control handle (203; 203') for a carriage equipped with two motorised wheels (201), the control handle (203;203') comprising a handle bar (207; 207') that is coupled to two test bodies (205A, 205B; 205A', 205B') that are intended to be rigidly connected to the carriage and each comprising two deformable zones (215/216, 217/218) equipped with first and second sensors (A1/A2, B1/B2), respectively, said sensors being suitable for generating respective electrical signals in response to deformations of the deformable zones of the test body when the user acts on the handle bar (207; 207'), the control handle comprising means for processing these numerical values (212) that are suitable for:
- generating respective numerical values (SA1/SA2, SB1/SB2) from the electrical signals of the sensors;
- discriminating, based on the numerical values, four actions on the handle bar, of which (A) one action is to push on the handle bar, (B) one action is to pull on the handle bar; (C) one action is to the left, and (D) one action is to the right;
- and generating corresponding orders for the motorised wheels, in order to turn the motors of the wheels in the same direction in response to the action (A) in order to move the carriage in a first advancement direction; to turn the motors of the wheels in the same direction in response to the action (B) in order to move the carriage in a second advancement direction that is opposite to the first advancement direction; to turn the motors of the wheels in opposite directions in response to action (C) in order to pivot the carriage in a first pivoting direction; and to turn the motors of the wheels in opposite directions in response to action (D) in order to pivot the carriage in a second pivoting direction that is opposite to the first pivoting direction.

2. Control handle according to claim 1, wherein the processing means (212) comprise calibration means for generating numerical values (SA1/SA2, SB1/SB2) of zero based on the electrical signals of the sensors in the absence of action on the handle bar.

3. Control handle according to claim 1, wherein the test bodies (205A, 205B) each comprise a block (214) that is intended to be rigidly connected to the carriage, the first deformable zone comprising a first flexible arm (215) connected to the block by a first deformable bend (216) and the second deformable zone comprising a second flexible arm (217) connected to the first arm by a second deformable bend (218).

4. Control handle according to claim 2, wherein the sensors (A1, A2) are optical fork sensors.

5. Control handle according to claim 1, wherein the test bodies (205A, 205B) are mounted on a support (204) that is intended to be rigidly connected to the carriage, each test body being protected from impacts by a plate (209) forming a bumper.

6. Control handle according to claim 1, wherein the test bodies (205A, 205B) are received in covers (210A, 210B), one of which receives an electronic board forming the processing means (212).

7. Control handle according to claim 1, comprising means (222) for detecting when the handle bar (207) is gripped by the user.

8. Control handle according to claim 1, wherein the processing means (212) include safety means that hold the motorised wheels in a braked state if the handle bar (207) is not being gripped, and only allowing the motors of the motorised wheels (201) to be powered if the handle bar (207) is gripped by the user.

9. Kit for assisting the movement of a carriage, comprising at least one control handle (200) according to claim 1, and at least one of the following elements:
- two motorised wheels (201);
- an electronic control board (212) forming the processing means;
- a power box (202) for the motorised wheels, comprising storage batteries.

10. Carriage with motorised wheels comprising at least one control handle according to claim 1.
